Europäisches Patentamt

European Patent Office

Office européen des brevets

(19)

(11) Veröffentlichungsnummer: **0 009 646**

**A1**

(12)     # EUROPÄISCHE PATENTANMELDUNG

(21) Anmeldenummer: 79103282.4

(22) Anmeldetag: 05.09.79

(51) Int. Cl.³: **C 22 C 14/00**
C 22 C 38/14, C 01 B 3/00
C 01 B 6/24, F 17 C 11/00

(30) Priorität: 15.09.78 DE 2840265

(43) Veröffentlichungstag der Anmeldung:
16.04.80 Patentblatt 80/8

(84) Benannte Vertragsstaaten:
AT BE CH FR GB IT NL SE

(71) Anmelder: Kernforschungsanlage Jülich Gesellschaft
mit beschränkter Haftung
Postfach 1913
D-5170 Jülich(DE)

(72) Erfinder: Klatt, Karl-Heinz
Wendelinusstrasse 64
D-5170 Jülich(DE)

(72) Erfinder: Wenzl, Helmut, Prof. Dr.
Berliner Strasse 29
D-5170 Jülich(DE)

(74) Vertreter: Garbeck, Hans, Dr.-Ing.
Artilleriestrasse 14
D-5170 Jülich(DE)

(54) Granulat aus einer FeTiMn-Legierung zur Speicherung von Wasserstoff und/oder Deuterium in Druckgasflaschen und Einrichtung zur Speicherung von Wasserstoff und/oder Deuterium.

(57) Ein zur Speicherung von Wasserstoff und/oder Deuterium in Druckgasflaschen geeignetes Granulat einer FeTiMn-Legierung wird gekennzeichnet durch einen Gehalt an Sauerstoff zu Mangan im Atomverhältnis 1:3 bis 1:3,5 und einen Titangehalt, der so bemessen ist, daß sich das durch Metalloxide nicht gebundene Titan zum nicht gebundenen Eisen in Atom% wie Ti : Fe $\geq$ 1:1 verhält und die FeTiMn-Legierung einen FeTi-Anteil von 90 bis 95 Gew% aufweist.

Bevorzugt wird das Granulat (2) in einer insbesondere ultrahochvakuumdicht ausgeführten Druckgasflasche (1) verwendet, in der sowohl das Aktivieren des Granulats (2) als auch eine gegebenenfalls erforderliche Reaktivierung durchführbar ist. Die ultrahochvakuumdichte Ausführung der Druckgasflasche (2) ermöglicht die Entnahme hochreinen Wasserstoffs und/oder Deuteriums. Der Reinheitsgrad des entnommenen Gases ist um den Faktor $2 \times 10^3$ gegenüber dem eingeführten Gas erhöht.

EP 0 009 646 A1

BAD ORIGINAL

0009646

- 1 -

Granulat aus einer FeTiMn-Legierung zur
Speicherung von Wasserstoff und/oder
Deuterium in Druckgasflaschen

Die Erfindung bezieht sich auf ein Granulat aus
einer FeTiMn-Legierung zur Speicherung von Wasserstoff und/oder Deuterium in Druckgasflaschen.

Eisen und Titan enthaltende Legierungen zur
Speicherung von Wasserstoff, $H_2$, und/oder Deuterium, $D_2$, zu verwenden, ist bekannt. Als besonders geeignet hat sich ein Granulat einer
Eisen und Titan in gleichem Verhältnis aufweisende Legierung bewährt, in der die zu
speichernden Gase $H_2$ und/oder $D_2$ unter Bildung

von FeTi-Hydrid eingelagert werden. Es hat sich
gezeigt, daß zum Zweck der Einlagerung von $H_2$
und/oder $D_2$ eine Aktivierung des Granulats vorausgehen muß. Hierzu wird das Granulat in Wasserstoffatmosphäre erhitzt und nachfolgend evakuiert.
Dabei entstehen Mikrorisse im Granulat, deren
oxidfreie Oberflächen zur Aufnahme von Wasserstoff und/oder Deuterium in die Legierung geeignet sind. Leitet man in das Granulat technisch reines $H_2$ und/oder $D_2$ Gas ein, so diffundieren Wasserstoff und/oder Deuterium in das

- 2 -

Granulat und im Restgas reichern sich die Verunreinigungen an, insbesondere Sauerstoff- und Stickstoffanteile. Nach Ablassen des verunreinigten Restgases läßt sich dem Granulat hochreines $H_2$ oder $D_2$ oder - falls Deuterium neben Wasserstoff im Granulat gespeichert wurde - ein $H_2$, $D_2$ und HD enthaltendes Gasgemisch entnehmen, vergleiche hierzu "Technische Information Nr. 6", Kernforschungsanlage Jülich GmbH, 1976, sowie DE-OS 26 07 156.

Aus einer Veröffentlichung von G.Strickland et al "Operating manuel for the hydrogen reservoir containing iron titanium hydride", Brookhaven National Laboratory, BNL 50421, Upton/New York, 1974, ist es bekannt, der FeTi-Legierung 1 bis 2 Gew.-% Mn anstelle von Fe beizumischen, um damit einem hohen Sauerstoffanteil in der Legierung entgegenzuwirken. Sauerstoff verschlechtert durch Oxidbildung drastisch die Speicherfähigkeit der Legierung. Nachteilig ist die aufwendige Aktivierungsphase des Granulats vor dessen Gebrauch als Speichermaterial.

Aufgabe der Erfindung ist es, ein zur Aufnahme von Wasserstoff und/oder Deuterium geeignetes Metallgranulat anzugeben, das bereits ohne be-

- 3 -

sondere Aktivierungsmaßnahmen eine hohe Speicherfähigkeit aufweist.

Diese Aufgabe wird gemäß der Erfindung durch das im Patentanspruch 1 gekennzeichnete Granulat gelöst. Dabei geht die Erfindung von der Erkenntnis aus, daß Sauerstoff in der Legierung einerseits zwar die Speicherfähigkeit des Granulats herabsetzt, daß aber andererseits mit steigendem Sauerstoffgehalt eine Versprödung des Granulats eintritt, die den Aktivierungsprozeß begünstigt. Beim Granulat gemäß der Erfindung werden die in der sauerstoffhaltigen FeTiMn-Legierung gebildeten Metalloxide, insbesondere $Mn_zTi_4O$ und $Mn_7Ti_{11}O_2$, zur Mikrorißbildung ausgenutzt. Dabei sind die Legierungsbestandteile des komplexen Systems so eingestellt, daß sich die in den Metalloxiden nichtgebundenen Ti - und Fe-Mengen in Atom% wie Ti:Fe $\geq$ 1 : 1 verhalten, daß Ti also gegenüber Eisen im Überschuß, zumindest aber zu gleichem Anteil, verbleibt. Der Sauerstoffgehalt der Legierung wird auf den Mangangehalt abgestellt, um eine Bildung eisenhaltiger Oxide zu vermeiden. Das Granulat dieser sehr spröden und brüchigen Legierung ist bei Raumtemperatur in Wasserstoffatmosphäre aktivierbar und weist eine Aufnahmefähigkeit für Wasserstoff zwischen 92 und 95 Atom% auf.

Bevorzugt besteht das Granulat aus einer Legierung, wie sie im Patentanspruch 2 angegeben ist. Optimale Resultate werden mit der im Patentanspruch 3 gekennzeichneten Legierung erzielt. Die Legierung löst zwischen 92 und 94 Atom% Wasserstoff und/oder Deuterium und aktiviert ohne Erhitzung in Wasserstoffatmosphäre bei etwa 60 bar in einer Zeit bis zu 20 Stunden. Eine Aktivierung schon zwischen 2 und 4 Stunden gelingt bei einem Granulat mit einer im Patentanspruch 4 angegebenen Teilchengröße. In den nach Patentansprüchen 2 und 3 gekennzeichneten Legierungen sind noch Restverunreinigungen unter 1 Gew.-% enthalten.

Als Speichereinrichtung wird zweckmäßig eine Druckgasflasche verwendet, wie sie im Patentanspruch 5 angegeben ist. Die Druckgasflasche ist hochvakuumdicht ausgeführt und enthält das Granulat als Schüttgutschicht. Bevorzugt sind Druckgasflaschen und deren Armaturen ultrahochvakuumdicht ausgeführt.

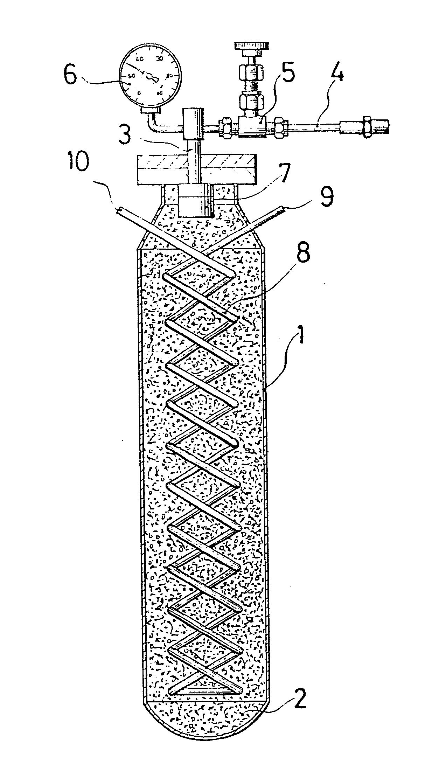

Die Erfindung wird anhand von Ausführungsbeispielen näher erläutert. Die Zeichnung zeigt schematisch eine als Speichereinrichtung ausgebildete Druckgasflasche.

Die in der Zeichnung wiedergegebene Druckgasflasche 1 enthält als Schüttgutschicht 2 ein Granulat einer Sauerstoff enthaltenden FeTiMn-Legierung. Die Druckgasflasche 1 besteht aus rostfreiem Stahl oder aus einer hochfesten Aluminium-Legierung und ist für einen Druck bis zu 100 bar ausgelegt. An der Druckgasflasche 1 befindet sich ein Anschlußstutzen 3 für eine Gasleitung 4, in die ein Ventil 5 eingesetzt ist. Zur Überwachung des Gasdruckes innerhalb der Druckgasflasche 1 ist im Ausführungsbeispiel ein Manometer 6 angebracht, dessen Meßleitung räumlich mit dem die Schüttgutschicht 2 aufnehmenden Innenraum der Druckgasflasche 1 verbunden ist. Das Manometer kann jedoch auch an anderer Stelle, beispielsweise am äußeren Ende der Gasleitung 4, eingesetzt sein. Die Armaturen der Druckgasflasche, wie Anschlußstutzen 3, Ventil 5, Manometer 6 und deren Anschlüsse an die Gasleitungen sind hochvakuumdicht oder ultrahochvakuumdicht ausgeführt. Ultrahochvakuumdichte Armaturen weisen Leckraten unter $10^{-10}$ mbar $\cdot$ l $\cdot$ sec$^{-1}$ auf.

Eine ultrahochvakuumdichte Ausbildung der Druckgasflasche 1 ist erforderlich, damit bei längerer Lagerzeit des gespeicherten Wasserstoffs und/oder Deuteriums keine Fremdgasanteile in den Innenraum der Druckgasflasche gelangen können. Die ultrahochvakuumdichte Ausführung ermöglicht es außerdem, den Aktivierungsvorgang des Granulats und die Reaktivierung innerhalb der Druckgasflasche vorzunehmen. Das Granulat besteht aus einer FeTiMn-Legierung, die zwischen 1,4 bis 2,4 Atom% Mn, 0,4 bis 0,8 Atom% $O_2$, 52 bis 55 Atom% Ti, Rest Fe enthält. Restliche Verunreinigungen liegen unter 1 Gew.%. Die Legierungsbestandteile des komplexen Systems sind derart bemessen, daß neben Mangan-Titan-Oxiden zwischen 90 bis 95 Gew.-% FeTi mit 50 Atom% Fe und 50 Atom% Ti gebildet wird. Die Aufnahmefähigkeit der Legierung wird begünstigt, wenn Ti gegenüber Fe im Überschuß bleibt. Dabei würde jedoch das Verhältnis Ti : Fe in Atom% 52 : 48 nicht übersteigen.

Zur Aktivierung wird das Teilchengrößen bis zu 2mm Durchmesser aufweisende Granulat zunächst in der Druckgasflasche bis auf einen Druck unter $10^{-1}$ mbar evakuiert, ehe das $H_2$ und/oder $D_2$ enthaltende Gasgemisch zur Speicherung von Wasser-

BAD ORIGINAL

stoff und/oder Deuterium in die Druckgasflasche 1 eingeleitet wird. In der Wasserstoff- und/oder Deuterium-Atmosphäre wird
das Granulat bei einem Druck von 60 bar
in der Druckgasflasche bei Raumtemperatur
bis zu 20 Stunden gelagert. Nach seiner
Aktivierung ist das Granulat für lange Betriebszeiten für die Aufnahme und Abgabe
von $H_2$ und $D_2$ geeignet.

Ein besonderer Vorzug ist dann gegeben, wenn
in die Druckgasflasche ein Gas eingeleitet
wird, das neben Wasserstoff auch Deuterium
enthält. In diesem Falle ist dem Granulat
ein Gasgemisch aus $H_2$, $D_2$ und HD entnehmbar.

Das Granulat läßt sich in der Druckgasflasche 1
im Temperaturbereich zwischen etwa 30 $^{\circ}$C bis
80 $^{\circ}$C und bei den diesen Temperaturen entsprechenden Gleichgewichtsdrücken im Druckbereich zwischen 2 bis 80 bar beladen und entladen. Sollte die Aufnahmefähigkeit des Granulats infolge einer Oxidation der Oberflächen
der Mikroporen und/oder Mikrorisse nachlassen,
ist der Aktivierungsschritt des Granulats innerhalb der Druckgasflasche 1 auch wiederholbar.

- 8 -

Über das Ventil 5 wird die Druckgasflasche 1 sowohl mit Gas gefüllt als auch entleert. Der Kontrolle des Druckes in der Druckgasflasche 1 dient das Manometer 6. Zwischen dem mit Granulat angefüllten Innenraum der Druckgasflasche 1 und der Gasleitung 4 befindet sich ein Staubfilter 7, der insbesonders dafür sorgt, daß der Ventilsitz des Ventils 5 beim Evakuieren der Druckgasflasche 1 oder bei der Entnahme von Gas vor mitgerissenen Partikeln aus dem Granulat geschützt ist.

In die Schüttgutschicht 2 der Druckgasflasche 1 ist als Wärmetauscher 8 eine in der Zeichnung schematisch wiedergegebene Rohrschlange eingeführt, die mit die Schüttgutschicht durchdringenden Wärmeleitblechen, beispielsweise aus Kupfer, versehen sein kann und außerhalb der Druckgasflasche sowohl einen Zuflußstutzen 9 als auch einen Ablaßstutzen 10 zum Einführen eines die Schüttgutschicht 2 kühlenden oder erwärmenden Wärmeaustauschmediums aufweist. Als Kühl- oder Heizmittel wird bevorzugt Wasser benutzt. Eine Kühlung des Granulats ist dann erforderlich, wenn bei Absorption großer Wasserstoff- und/oder Deuterium-Mengen im Metallgitter innerhalb kurzer Zeiteinheit die freiwerdende Absorptionswärme die Schüttgutschicht 2 aufheizt. Entsprechend ist eine
Erwärmung der Schüttgutschicht 2 notwendig,
wenn große Gasmengen rasch entommen werden
sollen. Dieser endotherme Prozeß bei der Entnahme von Gas aus der Speichereinrichtung
trägt entscheidend zur Sicherheit der Druckgasflasche 1 bei. Bei einem unerwünschten
Bruch der Gasleitung 4 kühlt das entweichende
Gas die Schüttgutschicht 2 schnell ab, so daß
sich bei sinkendem Gleichgewichtsdruck eine
Selbsthemmung einstellt.

Wird die Druckgasflasche mit einem Ganulat
einer FeTiMn-Legierung gefüllt, die 2 Gew.-%
Mn, 0,4 Gew.-% $O_2$, 49 bis 51 Gew.-% Ti, Rest
Fe und Verunreinigungen unter 1 Gew.-% enthält,
so läßt sich das Granulat in sehr kurzer Zeit
aktivieren. Mit einem Granulat, dessen Körner
eine Korngröße zwischen 0,1 und 1,0 mm Durchmesser aufweisen, wurden nach Evakuieren der
Druckgasflasche auf einen Druck von $\leq 10^{-1}$ mbar
und anschließender Einleitung eines $H_2$ enthaltenden Gasgemisches bis zu einem Druck von
60 bar Aktivierungszeiten zwischen 2 bis 4
Stunden bei Raumtemperatur erreicht. Von der
Legierung wurden zwischen 92 bis 94 Atom% Was-

serstoff gelöst, Als Verunreinigungen wies die Legierung geringe Mengen Al und Cr auf. Eine chemische Analyse der Legierung ergab 0,5 Gew.% Al und 0,1 Gew.-%, Cr.

Bei Einleiten von $H_2$- oder $D_2$-Gas, das einen Fremdgasanteil von maximal 1 % aufwies, konnte im Granulat ein Beladungsgrad zwischen 93 bis 95 Atom% erzielt werden. Dabei war das Gasgemisch in die Druckgasflasche bei Raumtemperatur bis zur Einstellung eines Druckes von etwa 65 bar eingeführt worden. Im Anschluß daran wurde zunächst aus der Druckgasflasche 1 ein Teil des Gases stoßweise abgelassen und dabei der Druck in der Gasflasche von 65 bar auf etwa 30 bar reduziert. Mit diesem Ablassen von Gas wird ein hoher Reinigungseffekt erzielt. Der Reinheitsgrad des der ultrahochvakuumdichten Flasche entnehmbaren Gases hinsichtlich der Fremdgasanteile an Sauerstoff, Stickstoff, Kohlenwasserstoff und ähnlichen Gasanteilen wird um den Faktor $2 \cdot 10^3$ gegenüber dem zuvor eingeführten Gas verbessert. Der hierbei in Kauf zu nehmende Verlust an brauchbarem Gas beträgt lediglich etwa 5 Vol%. Im Anschluß an diesen Reinigungsschritt kann ein $H_2$- oder $D_2$-Gas mit einem Verunreinigungsgrad $\leq$ 1 ppm entnommen werden,

- 11 -

das heißt ein Gas das zu 99,9999 Vol% $H_2$ oder $D_2$ aufweist.

Geeignete Granulate werden zweckmäßig induktiv in Aluminium-Tiegeln erschmolzen. In solchen Tiegeln bedarf es wegen der chemischen Zusammensetzung des Tiegelmaterials keiner zusätzlichen Sauerstoffzufuhr. Der Sauerstoffgehalt in der Legierung wird über die Schmelzzeit reguliert.

– 12 –

Patentansprüche

1. Granulat aus einer FeTiMn-Legierung zur Speicherung von Wasserstoff und/oder Deuterium in Druckgasflaschen, g e k e n n z e i c h n e t d u r c h eine Sauerstoff zu Mangan im Atomverhältnis 1 : 3 bis 1 : 3,5 enthaltende FeTiMn-Legierung, deren Titangehalt so bemessen ist, daß sich das durch Metalloxide nicht gebundene Titan zum nicht gebundenen Eisen in Atom% wie Ti:Fe $\geq$ 1 : 1 verhält und die FeTiMn-Legierung einen FeTi-Anteil von 90 bis 95 Gew.-% aufweist.

2. Granulat nach Anspruch 1, d a d u r c h g e - k e n n z e i c h n e t , daß die FeTiMn-Legierung aus 1,4 bis 2,4 Atom% Mangan, 0,4 bis 0,8 Atom% Sauerstoff, 52 bis 55 Atom% Titan und Eisen als Rest besteht.

3. Granulat nach Anspruch 1 oder 2, d a - d u r c h g e k e n n z e i c h n e t , daß die FeTiMn-Legierung aus 2 Gew.-% Mangan, 0,4 Gew-% Sauerstoff, 49 bis 51 Gew.-% Titan und Eisen als Rest besteht.

4. Granulat nach Anspruch 1, 2 oder 3 d a - d u r c h g e k e n n z e i c h n e t , daß die Granulatkörner eine Teilchengröße in Bereich zwischen 0,1 bis 1,0 mm Durchmesser aufweisen.

5. Verwendung eines Granulates einer FeTiMn-Legierung g e k e n n z e i c h n e t nach einem der Ansprüche 1 bis 4 in einer Speichereinrichtung zur Speicherung von Wasserstoff und/oder Deuterium, bestehend aus einer hochvakuumdichten, insbesondere ultrahochvakuumdichten Druckgasflasche, die mit dem eine Schüttgutschicht bildenden Granulat gefüllt ist und mittels eines Ventils mit zumindest einem Anschlußstutzen für eine Gasleitung zu öffnen und zu schließen ist, wobei in die Schüttgutschicht des Granulats ein Wärmetauscher mit von außen zugänglichen Anschlü ssen

BAD ORIGINAL

für ein Wärmetauschmedium geführt ist.

6. Speichereinrichtung zur Speicherung von Wasserstoff und/oder Deuterium, bestehend aus einer hochvakuumdichten, insbesondere ultrahochvakuumdichten Druckgasflasche, die mit einem eine Schüttgutschicht bildenden Granulat einer FeTiMn-Legierung, g e - k e n n z e i c h n e t nach einem der Ansprüche 1 bis 3, gefüllt ist und mittels eines Ventils mit zumindest einem Anschlußstutzen für eine Gasleitung zu öffnen und zu schließen ist, wobei in die Schüttgutschicht des Granulats ein Wärmetauscher mit von außen zugänglichen Anschlüssen für ein Wärmeaustauschmedium geführt ist.

**Europäisches Patentamt**

**EUROPÄISCHER RECHERCHENBERICHT**

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | FR - A1 - 2 331 623 (PHILIPS) * Seite 5 * -- | 1 | C 22 C 14/00 C 22 C 38/14 C 01 B 3/00 C 01 B 6/24 F 17 C 11/00 |
| | US - A - 3 508 414 (US ATOMIC ENERGY) * Spalte 4 * -- | 1 | |
| | US - A - 3 922 872 (US ENERGY RESEARCH) * Spalte 2 * -- | 1 | **RECHERCHIERTE SACHGEBIETE (Int. Cl.3)** C 01 B 3/00 C 01 B 6/24 C 22 C 14/00 C 22 C 38/14 F 17 C 11/00 |
| | US - A - 4 079 523 (INTERNATIONAL NICKEL) * Spalte 6 * -- | 1 | |
| D | DE - A1 - 2 607 156 (KERNFOR- SCHUNGSANLAGE JÜLICH) * Seiten 1 und 2 * ---- | 6 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

| X | Der vorliegende Recherchenbericht wurde für alle Patentansprüche erstellt. |
|---|---|

| Recherchenort Berlin | Abschlußdatum der Recherche 07-01-1980 | Prüfer SUTOR |
|---|---|---|